# EUROPEAN PATENT APPLICATION

(11) **EP 4 239 018 A1**
(43) Date of publication of application: **06.09.2023**
(21) Application number: 22752662.1
(22) Date of filing: 03.02.2022
(51) Int. Cl.: C08J 9/04, B32B 5/18, B32B 27/30, C08J 9/22, C08K 3/013, C08L 21/00, C08L 29/14, C08L 57/00, C08L 67/00

(54) **FOAM BODY, LAYERED FOAM BODY, LAMINATE AND HOUSING BUILDING MATERIAL**

(30) Priority: 10.02.2021 JP 2021019855
(71) Applicant: SEKISUI CHEMICAL CO., LTD., 530-0047 (JP)
(72) Inventor: MASUYAMA, Yoshikazu, Mishima-gun, Osaka 618-0021 (JP); TAKAHASHI, Katsunori, Koka-shi, Shiga 528-8585 (JP); HAMADA, Takanori, Koka-shi, Shiga 528-8585 (JP)
(74) Representative: Cabinet Beau de Loménie
(86) International application number: PCT/JP2022/004148
(87) International publication number: WO 2022/172835

(57) **Abstract**

The present invention provides a foam, a laminated foam, and a laminate that are capable of providing good walking comfort and exhibiting excellent vibration-damping properties while being lightweight and are also useful for recycling interlayer films for a laminated glass. The present invention also aims to provide a building material for housing including any of the foam, the laminated foam, and the laminate. Provided is a foam having a plurality of cells, the foam containing a polyvinyl acetal and a plasticizer and having an average aspect ratio (a/b) of cells of 1.1 or greater as calculated by a predetermined method.

## Description

### TECHNICAL FIELD

The present invention relates to foams, laminated foams, laminates, and building materials for housing.

### BACKGROUND ART

Resin foams are lightweight, flexible, and excellent in properties such as shock absorption properties and vibration-damping properties. Resin foams thus have various applications including members for vehicles such as automobiles, aircraft, and ships, members for buildings, electronic components, building materials for housing such as flooring, and electrical appliances for home and commercial use.

A laminated glass including two glass plates bonded together with an interlayer film for a laminated glass containing a plasticized polyvinyl acetal is common as glass for vehicles such as automobiles and aircraft or windowpanes of buildings. Producing such a laminated glass involves cutting off the extra ends of the interlayer film for a laminated glass when bonding the interlayer film to the glass, resulting in discarding large amounts of interlayer films for a laminated glass. Disassembling laminated glass not meeting the quality standard or used laminated glass also results in discarding large amounts interlayer films for a laminated glass.

From the standpoint of recycling and the like, reuse of waste of interlayer films for a laminated glass has been demanded. For example, a polyvinyl acetal porous body containing a polyvinyl acetal and a plasticizer and having a large number of cells has been developed (see Patent Literature 1). This polyvinyl acetal porous body is obtainable using waste of interlayer films for a laminated glass directly as a raw material, and thus highly useful for recycling interlayer films for a laminated glass.

### CITATION LIST

### - Patent Literature

Patent Literature 1: WO 2018/016536

### SUMMARY OF INVENTION

### - Technical problem

As described above, the polyvinyl acetal porous body disclosed in Patent Literature 1, for example, has been developed from the standpoint of recycling interlayer films for a laminated glass. This polyvinyl acetal porous body is useful in various applications because it exhibits high shock absorption properties and excellent vibration-damping properties while being lightweight. However, when this polyvinyl acetal porous body is used for flooring, for example, mainly the walking comfort (cushioning) is unsatisfactory as described later. There is thus still room for improvement to achieve good walking comfort in addition to properties such as light weight and vibration-damping properties to better meet the market needs such as quietness and comfort.

In view of the situation in the art, the present invention aims to provide a foam, a laminated foam, and a laminate that are capable of providing good walking comfort and exhibiting excellent vibration-damping properties while being lightweight and are also useful for recycling interlayer films for a laminated glass. The present invention also aims to provide a building material for housing including any of the foam, the laminated foam, and the laminate.

### - Solution to problem

The present inventors focused on the polyvinyl acetal porous body disclosed in Patent Literature 1 as a material useful for recycling interlayer films for a laminated glass. The inventors found out that when the porous body is used for flooring for housing, for example, mainly the walking comfort (also referred to as cushioning) is unsatisfactory. As a result of extensive studies, the inventors have found out that the walking comfort is affected by the aspect ratio (a/b), i.e., the ratio of the length (a) in the thickness direction to the length of the major axis (b) in the plane direction, of the cells in the foam. The inventors have found out that when the average aspect ratio (a/b) of all the cells in a predetermined region is 1.1 or greater, the foam has significantly good walking comfort and excellent vibration-damping properties, and can be useful for recycling interlayer films for a laminated glass. Such a foam can be particularly suitably used for sound-insulating floors and sound-insulating walls because it can exhibit high vibration-damping properties while being lightweight. Moreover, such a foam also has high compressive strength to provide good underfoot comfort when used for flooring, for example. The foam can provide a high-performance, lightweight vibration-damping material that addresses the market needs such as quietness and comfort, and thus is significantly useful in a wide range of applications. The inventors thus completed the present invention.

The present invention relates to a foam having a plurality of cells, the foam containing: a polyvinyl acetal; and a plasticizer, the foam having an average aspect ratio (a/b) of cells of 1.1 or greater,
the average aspect ratio (a/b) being calculated by a method wherein the foam is bonded to a PET film having a thickness of 100 um, cut to a size having a width in TD of 4 mm and a length in MD of 17 mm, and imaged with an X-ray CT device to obtain an image of a center portion in a thickness direction having a thickness of 3 mm, a width in TD of 3 mm, and a width in MD of 15 mm; the obtained image is subjected to three-dimensional analysis using image processing software, followed by binarization to separate cell portions from resin portions; subsequently, a cell region touching an image edge is deleted, and three-dimensionally independent cells are labelled; and finally, an aspect ratio, a/b, is calculated where a is a width that each extracted cell region occupies in the thickness direction and b is a width that the cell region occupies in TD.

The present invention also relates to a laminated foam including: the foam; and a non-woven fabric laminated on at least one main surface of the foam.

The present invention also relates to a laminate including: a resin sheet containing a polyvinyl acetal, a plasticizer, and a foaming agent; and a non-woven fabric laminated on at least one main surface of the resin sheet.

The present invention also relates to a building material for housing, the building material including the foam, the laminated foam, or the laminate.

The present invention is described in detail below.

The foam of the present invention contains a polyvinyl acetal and a plasticizer. The foam may further contain other components as needed. Each of the constituent components may be used alone or in combination of two or more.

The polyvinyl acetal may be a polyvinyl acetal that is used for interlayer films for a laminated glass. In the present invention, use of waste of interlayer films for a laminated glass generated in large amounts is particularly very significant from the standpoint of recycling and the like.

The polyvinyl acetal may be any polyvinyl acetal obtained by acetalizing polyvinyl alcohol with an aldehyde. Polyvinyl butyral is preferred.

The polyvinyl acetal preferably has a degree of acetalization of 40 mol% or greater, more preferably 60 mol% or greater, for example. The degree of acetalization is preferably 85 mol% or less, more preferably 75 mol% or less.

The polyvinyl acetal preferably has a hydroxy group content of 15 mol% or greater and 40 mol% or less, for example. A hydroxy group content within this range allows the polyvinyl acetal to have high compatibility with the plasticizer.

The degree of acetalization and the hydroxy group content can be measured in conformity with JIS K6728 (1977) "Testing Methods for Polyvinyl Butyral", for example.

The polyvinyl acetal can be prepared by acetalizing polyvinyl alcohol with an aldehyde.

Polyvinyl alcohol is commonly prepared by saponifying polyvinyl acetate. Polyvinyl alcohol with a degree of saponification of 70 to 99.8 mol% is typically used. The degree of saponification of the polyvinyl alcohol is preferably 80 to 99.8 mol%.

The polyvinyl alcohol preferably has an average degree of polymerization of 500 or greater. This allows the resulting foam to have better handleability. The average degree of polymerization is more preferably 1,000 or greater and is preferably 4,000 or less. This facilitates the molding of the foam. The average degree of polymerization is more preferably 3,600 or less.

The average degree of polymerization of the polyvinyl alcohol can be measured in conformity with JIS K6726 (1994) (Testing Methods For Polyvinyl Alcohol).

Two or more polyvinyl acetals may be blended.

The aldehyde is not limited. A C1-C10 aldehyde is commonly suitably used. The C1-C10 aldehyde is not limited. Examples thereof include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. Preferred among these are n-butyraldehyde, n-hexylaldehyde, and n-valeraldehyde, and more preferred is n-butyraldehyde.
These aldehydes may be used alone or in combination of two or more.

The plasticizer is not limited. Examples thereof include: organic ester plasticizers such as monobasic organic acid esters and polybasic organic acid esters; and phosphoric acid plasticizers such as organophosphate plasticizers and organophosphite plasticizers. The plasticizer is preferably a liquid plasticizer.

The monobasic organic acid esters are not limited. Examples thereof include glycol esters obtained by reaction between a glycol (e.g., triethylene glycol, tetraethylene glycol, and tripropylene glycol) and a monobasic organic acid (e.g., butyric acid, isobutyric acid, caproic acid, 2-ethylbutyric acid, heptylic acid, n-octylic acid, 2-ethylhexylic acid, pelargonic acid (n-nonylic acid), and decylic acid). In particular, preferred are triethylene glycol dicaproate, triethylene glycol di-2-ethylbutyrate, triethylene glycol di-n-octylate, and triethylene glycol di-2-ethylhexylate.

The polybasic organic acid esters are not limited. Examples thereof include ester compounds of a polybasic organic acid (e.g., adipic acid, sebacic acid, and azelaic acid) with a C4-C8 linear or branched alcohol. In particular, preferred are dibutyl sebacate, dioctyl azelate, and dibutyl carbitol adipate.

The organic ester plasticizers are not limited. Examples thereof include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicapriate, dihexyl adipate, dioctyl adipate, hexylcyclohexyl adipate, diisononyl adipate, heptylnonyl adipate, dibutyl sebacate, oil-modified sebacic alkyds, mixtures of phosphates and adipates, adipates, mixed type adipates prepared from C4-C9 alkyl alcohols and C4-C9 cyclic alcohols, and C6-C8 adipates such as hexyl adipate.

The organic phosphoric acid plasticizers are not limited. Examples thereof include tributoxyethyl phosphate, isodecylphenyl phosphate, and triisopropyl phosphate.

For less hydrolysis, the plasticizer contains preferably triethylene glycol di-2-ethylhexanoate (3GO), triethylene glycol di-2-ethylbutyrate (3GH), tetraethylene glycol di-2-ethylhexanoate (4GO), and/or dihexyl adipate (DHA), more preferably tetraethylene glycol di-2-ethylhexanoate (4GO) and/or triethylene glycol di-2-ethylhexanoate (3GO), still more preferably triethylene glycol di-2-ethylhexanoate (3GO).

The amount of the plasticizer is not limited. The amount relative to 100 parts by weight of the polyvinyl acetal is preferably 10 parts by weight or greater and 80 parts by weight or less. When the amount of the plasticizer is within this range, the foam can exhibit higher shock absorption properties. Additionally, bleeding-out of the plasticizer from the foam can be sufficiently reduced. The lower limit of the amount is more preferably 20 parts by weight or greater, still more preferably 30 parts by weight or greater. The upper limit thereof is more preferably 70 parts by weight or less, still more preferably 60 parts by weight or less, particularly preferably 50 parts by weight or less.

Many interlayer films for a laminated glass contain a plasticizer in an amount of about 20 to 55 parts by weight relative to 100 parts by weight of the polyvinyl acetal. Therefore, discarded interlayer films for a laminated glass can be directly used as a raw material of the foam of the present invention.

The foam of the present invention may contain a tackifier (also referred as a tackifying agent). When containing a tackifier, the foam has further improved vibration-damping properties. Such an embodiment in which the foam further contains a tackifier is another preferred embodiment of the present invention.

Examples of the tackifier include: petroleum-type resins such as aliphatic copolymers (also referred to as aliphatic petroleum resins), aromatic copolymers (also referred to as aromatic petroleum resins), aliphatic aromatic copolymers (also referred to as aliphatic-aromatic copolymer petroleum resins), and alicyclic copolymers (also referred to as alicyclic petroleum resins); coumarone-indene resins; terpene resins; terpene phenol resins; and rosin resins such as polymerized rosin; (alkyl) phenol resins; xylene resins; and hydrogenated products of these. In particular, for improvement of the foaming properties and the vibration-damping properties, petroleum-type resins (also referred to as petroleum resins) are preferred, and hydrides of petroleum resins (also referred to as hydrogenated petroleum resins) are more preferred. Use of a hydrogenated petroleum resin advantageously further improves the foaming properties and the vibration-damping properties and also reduces odor.

The petroleum resin is a resin obtained by polymerizing an unsaturated hydrocarbon-containing fraction generated as a by-product of thermal cracking of petroleum naphtha or the like. Specific examples include aliphatic petroleum resins obtained by copolymerizing the C5 fraction containing pentenes, isoprene, piperine, and the like produced by thermal cracking of petroleum naphtha; aromatic petroleum resins obtained by polymerizing the C9 fraction as a main component; and dicyclopentadiene petroleum resins. Hydrogenated petroleum resins are preferred among these as described above. For improvement of the productivity and vibration-damping properties, particularly preferred among these is an aromatic hydrogenated petroleum resin obtained by hydrogenating a C9 petroleum resin (i.e., hydride of a C9 petroleum resin).

The petroleum resin preferably has a softening point of 100°C or higher. This can further improve the foaming properties and the vibration-damping properties and allows the foam to exhibit higher vibration-damping/sound-insulating effect in the temperature range of 0°C to 40°C, particularly 5°C to 25°C. The softening point is more preferably 120°C or higher, still more preferably 130°C or higher. A higher softening point leads to less plastic deformation of the resin, and in turn higher vibration-damping properties. The upper limit of the softening point is not limited, but is preferably 200°C or lower, for example. This can reduce a decrease in the loss factor of the vibration-damping material while sufficiently preventing the foam from being too brittle. The softening point is more preferably 180°C or lower, still more preferably 150°C or lower, particularly preferably 145°C or lower.

Especially the tackifier that is a hydrogenated petroleum resin having a softening point of 100°C or higher leads to better vibration-damping properties and better productivity, and also is very suitable for odor reduction. Such an embodiment in which the tackifier is a hydrogenated petroleum resin having a softening point of 100°C or higher is another preferred embodiment of the present invention.

Here, use of petroleum resins having different softening points is also preferable. For example, when the foam contains a petroleum resin (A) having a softening point of 130°C or higher in combination with a petroleum resin (B) having a softening point of lower than 130°C as the petroleum resins, the amount of the hydrogenated petroleum resin (A) in 100% by mass of the total amount of these resins is preferably 30% by mass or greater, more preferably 50% by mass or greater. This further improves the foaming properties and vibration-damping properties. The amount of the hydrogenated petroleum resin (A) is still more preferably 60% by mass or greater, further preferably 70% by mass or greater, particularly preferably 80% by mass or greater, even further preferably 90% by mass or greater. The upper limit is 100% by mass or less, most preferably 100% by mass. Particularly in the present invention, the foam preferably contains a hydrogenated petroleum resin having a softening point of 130°C or higher as the tackifier.

The amount of the tackifier is not limited, but is preferably 1 part by weight or greater and 30 parts by weight or less relative to 100 parts by weight of the polyvinyl acetal. When the amount of the tackifier is within this range, the vibration-damping properties can be further improved. The lower limit of the amount is more preferably 2 parts by weight or greater, still more preferably 5 parts by weight or greater. The upper limit thereof is more preferably 20 parts by weight or less.

The foam of the present invention may contain a filler (also referred to as a filling material). The foam containing a filler has a higher compressive strength and provides better walking comfort. Such an embodiment in which the foam contains a filler is another preferred embodiment of the present invention.

Preferred examples of the filler include inorganic fillers such as phosphates, sediments, ashes, metal oxides, metal hydroxides, carbonates, minerals, sulfates, magnetic powders, silicates, nitrides, carbides, borides, sulfides, and fibrous substances. Specific examples include phosphates such as inorganic phosphorous compounds; sediments such as diatomite; ashes such as fly ash; metal oxides such as silica, alumina, titanium oxide, calcium oxide, magnesium oxide, iron oxide, tin oxide, and antimony oxide; metal hydroxides such as calcium hydroxide, magnesium hydroxide, and aluminum hydroxide; carbonates such as basic magnesium carbonate, calcium carbonate, magnesium carbonate, zinc carbonate, and barium carbonate; minerals such as dawsonite, hydrotalcite, silicon carbide, clay minerals, and mica; sulfates such as calcium sulfate, barium sulfate, and magnesium sulfate; magnetic powders such as calcium silicate, potassium silicate, zinc borate, and ferrite; silicates such as glass beads and silica balloons; nitrides such as aluminum nitride, boron nitride, and silicon nitride; carbides such as carbon black, graphite, and hollow carbon particle charcoal powder; titanium oxides such as potassium titanate and lead zirconate titanate; borides such as aluminum borate; sulfides such as molybdenum sulfide; and fibrous substances such as carbon fiber, gypsum fiber, glass fiber, stainless steel fiber, slag fiber, silica alumina fiber, alumina fiber, silica fiber, and zirconia fiber. Sulfates are preferred among these because they are inexpensively available in large amounts, and lead to better vibration-damping properties and better walking comfort of the foam. Barium sulfate is more preferred. Such an embodiment in which the filler is barium sulfate is another preferred embodiment of the present invention.

The average size of the filler is not limited. The average size is preferably 0.1 um or greater and 30 um or less, for example. When the average size is within the range, the aggregation of the filler is sufficiently reduced, allowing the effect of the filler to be sufficiently exhibited. Moreover, the foam can be foamed better. The upper limit of the average size is more preferably 10 um or less, still more preferably 5 um or less.

The average size of the filler is a particle number-based average size and means the 50th percentile median size (D50). For example, the average size can be measured by a laser diffraction/scattering method, an image analysis method, a Coulter method, or a centrifugal sedimentation method, and is preferably measured by a laser diffraction/scattering method.

The amount of the filler is not limited. The amount relative to 100 parts by weight of the polyvinyl acetal is preferably 10 parts by weight or greater and 60 parts by weight or less. When the amount of the filler is within this range, the walking comfort can be even better. The lower limit of the amount is more preferably 20 parts by weight or greater, still more preferably 30 parts by weight or greater. The upper limit thereof is more preferably 50 parts by weight or less.

The foam of the present invention may further contain a thermoplastic elastomer and/or a liquid crystal polymer. When containing a thermoplastic elastomer and/or a liquid crystal polymer, the foam has higher vibration-damping properties. Such an embodiment in which the foam contains a thermoplastic elastomer and/or a liquid crystal polymer is another preferred embodiment of the present invention. Both an embodiment in which the foam further contains a thermoplastic elastomer and an embodiment in which the foam further contains a liquid crystal polymer are included in preferred embodiments.

The thermoplastic elastomer means a polymer compound that softens and shows plasticity when heated and hardens and shows rubber elasticity when cooled. It is distinguished from a thermoplastic resin. The thermoplastic elastomer is a polymer compound having a hard segment and a soft segment.

The thermoplastic elastomer is not limited. Examples thereof include styrenic thermoplastic elastomers, urethane thermoplastic elastomers, olefinic thermoplastic elastomers, and amide thermoplastic elastomers. In particular, to improve the compatibility with the polyvinyl acetal to achieve higher vibration-damping properties, at least a styrenic thermoplastic elastomer (also referred to as a styrenic elastomer) is preferably used. In other words, an embodiment in which the foam further contains a styrenic thermoplastic elastomer is another preferred embodiment of the present invention.

Examples of preferred styrenic thermoplastic elastomers include polymers such as styrene-butadienestyrene copolymers, styrene-ethylene-butylene-styrene copolymers, styrene-ethylene-propylene-styrene copolymers, styrene-ethylene-propylene copolymers, styrene-isoprene-styrene copolymers, styrene-ethylene-(ethylene-propylene)-styrene copolymers, and styrene-isobutylene-styrene copolymer, as well as modified products and hydrogenated products (hydrides) of these polymers, graft copolymers having a styrene structure in a side chain, and core-shell multilayer structure rubbers having a styrene structure in the shell. Preferred among these are styrene-butadienestyrene copolymers and hydrogenated products (hydrides) thereof. More preferred are hydrides of styrenic thermoplastic elastomers, and still more preferred are hydrogenated products (hydrides) of styrene-butadienestyrene copolymers.

The styrenic thermoplastic elastomer preferably has a styrene content of 30% by mass or greater and 80% by mass or less. In this case, the resulting foam has higher vibration-damping properties. The lower limit of the styrene content is more preferably 40% by mass or greater, still more preferably 50% by mass or greater, particularly preferably 55% by mass or greater. The upper limit thereof is more preferably 70% by mass or less, still more preferably 65% by mass or less.

The styrenic thermoplastic elastomer may have a styrene content of 1% by mass or greater and 55% by mass or less. Such an embodiment is also preferred. In this case, the foam has a more uniform porous structure and higher air permeability. The lower limit of the styrene content is more preferably 2% by mass or greater, still more preferably 3% by mass or greater. The upper limit thereof is more preferably 50% by mass or less, still more preferably 45% by mass or less.

The styrene content of the styrenic thermoplastic elastomer means the percentage (% by mass) of styrene-derived structural units in 100% by mass of all structural units constituting the styrenic thermoplastic elastomer (structural units derived from all raw material monomers). The styrene content can be determined by compositional analysis using a nuclear magnetic resonance (NMR) device.

The thermoplastic elastomer preferably has a weight average molecular weight of 150,000 or greater as measured by gel permeation chromatography (GPC). This further improves the vibration-damping properties. The weight average molecular weight is more preferably 160,000 or greater, still more preferably 180,000 or greater. The upper limit thereof is not limited, but is preferably 1,000,000 or less, for example. The upper limit is more preferably 800,000 or less, still more preferably 600,000 or less.

The thermoplastic elastomer preferably has a MFR of 30 g/10 min or less at a temperature of 230°C and a load of 2.16 kg or a MFR of 30 g/10 min or less at a temperature of 190°C and a load of 2.16 kg. This further improves the vibration-damping properties. The MFR at a temperature of 230°C and a load of 2.16 kg is more preferably 10 g/10 min or less, still more preferably 5 g/10 min or less. The lower limit thereof is not limited, but is preferably 0.1 g/10 min or greater. The MFR at a temperature of 190°C and a load of 2.16 kg is more preferably 10 g/10 min or less, still more preferably 5 g/10 min or less. The lower limit thereof is not limited, but is preferably 0.1 g/10 min or greater.

The MFR can be measured in conformity with ISO1133.

The liquid crystal polymer (also referred to as LCP) means a synthetic resin that shows liquid-crystal like properties in a molten state with its linear molecular chains aligning regularly and belongs to thermoplastic resins. Specific non-limiting examples include thermotropic liquid crystal-forming wholly aromatic polyesters and melt-anisotropic polyesters. For higher vibration-damping properties, thermotropic liquid crystal-forming wholly aromatic polyesters are preferred.

A thermotropic liquid crystal-forming wholly aromatic polyester is an aromatic polyester that is optically anisotropic (liquid crystalline) in a molten phase.

Examples of compounds contained in the structural units of the thermotropic liquid crystal-forming wholly aromatic polyester include diols having an aromatic skeleton, dicarboxylic acids having an aromatic skeleton, hydroxy acids having an aromatic skeleton, aminoalcohols having an aromatic skeleton, and aminocarboxylic acids having an aromatic skeleton. One or two or more of them are used. Among these, a diol having an aromatic skeleton, a dicarboxylic acid having an aromatic skeleton, or a hydroxy acid having an aromatic skeleton is preferably used.

Examples of the diols having an aromatic skeleton include hydroquinone, 4,4'-biphenol, bisphenol A, and bisphenol S.

Examples of the dicarboxylic acids having an aromatic skeleton include terephthalic acid, isophthalic acid, 1,6-naphthalenedicarboxylic acid, 2,7-naphthalenedicarboxylic acid, 1,4-naphthalenedicarboxylic acid, 1,5-naphthalenedicarboxylic acid, 4,4'-biphenyldicarboxylic acid, 4,4'-oxydibenzoic acid, 4,4'-methylenedibenzoic acid, and 4,4'-sulfonyldibenzoic acid.

Examples of the hydroxy acids having an aromatic skeleton include 6-hydroxy-2-naphthoic acid and p-hydroxybenzoic acid.

Examples of the aminoalcohols having an aromatic skeleton include p-aminophenol.

Examples of the aminocarboxylic acids having an aromatic skeleton include p-aminobenzoic acid.

The melting point of the liquid crystal polymer is not limited, but is preferably 200°C or lower. This leads to higher vibration-damping properties. Moreover, such a liquid crystal polymer can be more suitably used in combination with a heat-decomposable foaming agent. The melting point is more preferably 180°C or lower, still more preferably 160°C or lower. The melting point of the liquid crystal polymer may be, but not limited to, 100°C or higher.

The melting point of the liquid crystal polymer means a main absorption peak temperature observed in differential scanning calorimetry (DSC) performed in conformity with JIS K7121 (2012) using a differential scanning calorimeter (e.g., "TA3000" produced by Mettler Toledo). Specifically, after 10 mg to 20 mg of a measurement sample (liquid crystal polymer) is encapsulated in an aluminum pan of the differential scanning calorimeter, nitrogen is allowed to flow as a carrier gas at a flow rate of 100 mL/min, and upon raising the temperature at 20°C/min, the main absorption peak temperature in the first run can be determined.

A clear main absorption peak may not appear in the first run depending on the type of the liquid crystal polymer. In this case, the temperature is raised to a temperature 50°C higher than an expected flow temperature at a temperature rise rate of 50°C/min, and held at the temperature for three minutes or longer to completely melt the liquid crystal polymer. This is followed by cooling to 50°C at 80°C/min, then raising the temperature at 20°C/min again to determine the main absorption peak temperature.

The amount of the thermoplastic elastomer and/or the liquid crystal polymer is not limited. The overall amount of them relative to 100 parts by weight of the polyvinyl acetal is preferably 1 part by weight or greater and 80 parts by weight or less. This further improves the vibration-damping properties. The overall amount of them relative to 100 parts by weight of the polyvinyl acetal is more preferably 1 part by weight or greater and 50 parts by weight or less.

Specifically, the amount of the thermoplastic elastomer relative to 100 parts by weight of the polyvinyl acetal is preferably 1 part by weight or greater and 80 parts by weight or less. The lower limit of the amount of the thermoplastic elastomer is more preferably 5 parts by weight or greater, still more preferably 8 parts by weight or greater, particularly preferably 10 parts by weight or greater, most preferably 12 parts by weight or greater. The upper limit thereof is more preferably 70 parts by weight or less, still more preferably 60 parts by weight or less, further preferably 50 parts by weight or less, particularly preferably 40 parts by weight or less, even further preferably 30 parts by weight or less, most preferably 20 parts by weight or less.

The amount of the liquid crystal polymer relative to 100 parts by weight of the polyvinyl acetal is preferably 1 part by weight or greater and 50 parts by weight or less. The lower limit of the amount of the liquid crystal polymer is more preferably 2 parts by weight or greater, still more preferably 3 parts by weight or greater, particularly preferably 5 parts by weight or greater, most preferably 8 parts by weight or greater. The upper limit thereof is more preferably 40 parts by weight or less, still more preferably 30 parts by weight or less, particularly preferably 20 parts by weight or less, even further preferably 15 parts by weight or less, most preferably 10 parts by weight or less. When the amount of the liquid crystal polymer is 20 parts by weight or less, breaking of cells is more sufficiently reduced, so that the formation of coarse cells due to breaking of cells is further prevented.

The foam of the present invention may further contain one or two or more additives such as adhesion modifiers, heat absorbing agents, UV blocking agents, antioxidants, light stabilizers, and antistatic agents. The foam may contain a pigment such as carbon black or a dye to adjust the appearance of the resulting foam.

The foam of the present invention has an average aspect ratio (a/b) of cells of 1.1 or greater as calculated by the above method. In a typical foam, cells tend to expand in the plane direction, causing their major axis (b) in the plane direction (i.e., the diameter in TD) to be longer than their length (a) in the thickness direction. In the present invention, the expansion of the cells in the plane direction is suppressed to achieve an average aspect ratio (a/b) of 1.1 or greater. With an average aspect ratio of 1.1 or greater, the foam can achieve improved cushioning and good walking comfort as well as high vibration-damping properties. The lower limit of the average aspect ratio (a/b) is preferably 1.2 or greater, more preferably 1.4 or greater, still more preferably 1.6 or greater. The upper limit of the average aspect ratio (a/b) is not limited, but is preferably 6.0 or less. This can sufficiently reduce breaking or chipping of the foam. The upper limit is more preferably 5.5 or less.

Here, in the method for calculating the average aspect ratio (a/b), the analyzed "center portion in a thickness direction having a thickness of 3 mm, a width in TD of 3 mm, and a width in MD of 15 mm" refers to a center portion in the thickness direction of the target foam (excluding the PET film to which the foam is bonded), having a thickness of 3 mm, a width in TD of 3 mm, and a width in MD of 15 mm.

To control the average aspect ratio of the foam, it is important to suppress the expansion of the cells in the plane direction during the production of the foam. Specifically, for example, the average aspect ratio is controlled by adjusting the mass per unit area of a non-woven fabric to the later-described preferred range and laminating the non-woven fabric on at least one main surface of the later-described resin sheet. In other words, it is preferred to use the later-described method for producing the foam and use a non-woven fabric having a mass per unit area within the later-described preferred range.

The foam of the present invention preferably has an average cell size of 100 um or greater and 1,000 um or less. This allows the foam to exhibit higher shock absorption properties. The lower limit of the average cell size is more preferably 120 um or greater, still more preferably 200 um or greater. The upper limit thereof is more preferably 500 um or less.

The average cell size can be measured by observing cell wall portions and void portions in a cross sectional observation photograph of cells and measuring the size of the voids portions. The cell size means the length of the major axis of a cell.

The foam of the present invention preferably has a percentage of open cells of 10% or greater. This allows the foam to have high shock absorption properties. The percentage is more preferably 20% or greater, still more preferably 30% or greater, particularly preferably 50% or greater. The upper limit of the percentage of open cells is not limited, but a practical upper limit is around 98%.

The "open cell" herein means cells connected to each other in the foam.

The percentage of open cells is defined as the volumetric percentage of cells connected to the outside of the foam, relative to the apparent volume of the foam determined by dimensional measurement. The percentage of open cells can be determined by pycnometry described in JIS K7138 (2006), for example.

The foam of the present invention preferably has an apparent density of 100 kg/m³ or greater. This allows the foam to have better shock absorption properties and better vibration-damping properties. The apparent density is more preferably 200 kg/m³ or greater, still more preferably 300 kg/m³ or greater, particularly preferably 400 kg/m³ or greater. For weight reduction, the upper limit of the apparent density is preferably 700 kg/m³ or less, more preferably 600 kg/m³ or less, still more preferably 500 kg/m³ or less.

The apparent density can be measured in conformity with JIS K7222 (2005).

The expansion ratio of the foam of the present invention in the plane direction before and after foaming is preferably 1.5 times or less. The expansion ratio of the foam in the thickness direction before and after foaming is preferably 1.5 times or greater. When the expansion ratios are in these ranges, the walking comfort is better. The expansion ratio in the plane direction before and after foaming is more preferably 1.4 times or less, still more preferably 1.3 times or less. The lower limit thereof is not limited, and is preferably 0.9 times or greater, for example. The expansion ratio in the thickness direction before and after foaming is more preferably 1.6 times or greater, still more preferably 1.7 times or greater. The upper limit thereof is not limited, and is preferably 40 times or less, more preferably 15 times or less, still more preferably 9 times or less, for example.

The expansion ratio before and after foaming is calculated by dividing the density of the foam before foaming by the density (apparent density) of the foam after foaming.

The foam of the present invention preferably has a compressive elastic modulus of less than 5 MPa. This improves the cushioning and the vibration-damping properties. The compressive elastic modulus is more preferably 3 MPa or less, still more preferably 2 MPa or less. Such an embodiment in which the compressive elastic modulus is 2 MPa or less is one preferred embodiment of the present invention. The lower limit of the compressive elastic modulus is not limited. To achieve strength suitable for various applications such as flooring, the lower limit is preferably 0.1 MPa or greater, for example. The lower limit is more preferably 1 MPa or greater.

The compressive elastic modulus can be determined in conformity with JIS K7181 (2011) by measuring the elastic modulus when a specimen with a size of 300 mm × 300 mm cut out of the foam is compressed at a test rate of 10 mm/min with an indenter having a diameter of 50 mm.

The foam of the present invention preferably has a loss factor of 0.1 or greater at an anti-resonance frequency at 20°C and 800 Hz or lower as measured by mechanical impedance measurement (MIM) in conformity with JIS K7391 (2008).

Specifically, the foam is fixed between a steel plate (width 12 mm, length 240 mm, thickness 1.2 mm) and aluminum of the same size (thickness 0.3 mm) using a double-sided tape (produced by Sekisui Chemical Co., Ltd., #5782). The resulting laminate sample is used to measure the loss factor and the resonance frequencies by the central exciting method. At this time, the loss factor at an anti-resonance point at 800 Hz or lower is preferably 0.1 or greater, more preferably 0.15 or greater.

One preferred embodiment is a laminated foam including the foam and aluminum laminated on at least one main surface of the foam, wherein the aluminum has a thickness of 0.1 mm or greater and 0.5 mm or less and the foam has a loss factor of 0.1 or greater at an anti-resonance frequency at 20°C and 800 Hz or lower as measured by mechanical impedance measurement (MIM) in conformity with JIS K7391 (2008).

The foam of the present invention preferably has a thickness of 10 mm or less. This allows the resulting foam to be more resistant to shear fracture. The thickness is more preferably 8 mm or less. The lower limit of the thickness is preferably 50 um or greater. This improves the sound insulation properties and other properties of the resulting foam. The thickness is more preferably 100 um or greater.

The foam of the present invention may be suitably produced by the following method, for example. Specifically, first, a resin composition is prepared by compounding the polyvinyl acetal, the plasticizer (and additives as needed) with a foaming agent. The obtained resin composition is formed into a raw sheet (i.e., a resin sheet containing a polyvinyl acetal, a plasticizer, and a foaming agent). Next, a non-woven fabric is laminated on at least one main surface of the obtained resin sheet. The foaming agent is then decomposed by heating. This production method can suitably produce the foam of the present invention.

The present invention also encompasses a laminate including a resin sheet containing a polyvinyl acetal, a plasticizer, and a foaming agent and a non-woven fabric laminated on at least main surface of the resin sheet.

The method for producing the resin sheet from the resin composition is not limited. For example, the resin composition may be extruded into the resin sheet with an extruder.

The resin sheet contains the polyvinyl acetal, the plasticizer, and the foaming agent. The resin sheet may contain other components as needed. Each of the constituent components may be used alone or in combination of two or more. Preferred embodiments and amounts of each constituent component are as described above.

The foaming agent is preferably a heat-decomposable foaming agent.

The heat-decomposable foaming agent preferably has a decomposition temperature of around 120°C to 240°C, and may be a conventionally known heat-decomposable foaming agent having a decomposition temperature within this range. To achieve a higher percentage of open cells, the heat-decomposable foaming agent used has a decomposition temperature higher than the molding temperature of the resin composition, which is the raw material before foaming, preferably by 20°C or more, more preferably by 50°C or more.

Specific examples of the heat-decomposable foaming agent include azodicarbonamide, N,N'-dinitrosopentamethylenetetramine, 4,4'-oxybis(benzenesulfonylhydrazide), urea, sodium hydrogen carbonate, and mixtures of these.

Examples of commercial products of the heat-decomposable foaming agent include CELLMIC series (produced by Sankyo Kasei Co., Ltd.) and VINYFOR series, CELLULAR series, and NEOCELLBORN series (produced by Eiwa Chemical Ind. Co., Ltd.).

The amount of the foaming agent is not limited. For example, the amount relative to 100 parts by weight of the polyvinyl acetal is preferably 4 parts by weight or greater and 20 parts by weight or less. When the amount of the foaming agent is within this range, a foam having a percentage of open cells of 10% or greater can be suitably produced. The lower limit of the amount of the foaming agent is more preferably 5 parts by weight or greater. The upper limit thereof is more preferably 15 parts by weight or less.

Examples of other components the resin sheet may further contain include the tackifiers described above, fillers, thermoplastic elastomers, liquid crystal polymers, various additives, pigments, and dyes. Preferred embodiments and amounts are as described above.

In the production method, a non-woven fabric is laminated on at least one main surface of the resin sheet (this can produce a laminate including a resin sheet containing a polyvinyl acetal, a plasticizer, and a foaming agent and a non-woven fabric laminated on at least one main surface of the resin sheet). The foaming agent is then decomposed by heating. Decomposing the foaming agent in such a manner, that is, by heating with the non-woven fabric laminated on the resin sheet, can sufficiently suppress expansion of the cells in the plane direction. Meanwhile, in the thickness direction, the voids present in the non-woven fabric allow cells to expand preferentially in the thickness direction, suitably resulting in a foam with an average aspect ratio (a/b) of 1.1 or greater.

The non-woven fabric may be any non-woven fabric having fine voids. The non-woven fabric preferably has a mass per unit area of 6 g/m² or greater. This allows adjustment of the average aspect ratio of the foam to a preferred range, leading to better moisture permeability and better air permeability. Moreover, with a mass per unit area within this range, the non-woven fabric has appropriate voids, allowing a foam with an average aspect ratio (a/b) of 1.1 or greater to be suitably obtained. Moreover, this can more sufficiently prevent breaking and corrugation during foaming. The mass per unit area is more preferably 8 g/m² or greater, still more preferably 10 g/m² or greater, particularly preferably 12 g/m² or greater, most preferably 15 g/m² or greater. To improve the vibration-damping properties, the upper limit of the mass per unit area is preferably 100 g/m² or less. This leads to not only better vibration-damping properties but also better air permeability and more stable cell shapes. This can also more sufficiently reduce foaming gas remaining between the resin sheet and the non-woven fabric, and thus sufficiently reduce separation of the resin sheet and the non-woven fabric, enabling adjustment of the average aspect ratio of the foam to a preferred range. The upper limit is more preferably 80 g/m² or less, still more preferably 60 g/m² or less.

The material of the non-woven fabric is not limited. Examples thereof include natural fibers such as cellulose, silk, hemp, and pulp; synthetic fibers such as polyester, nylon, rayon, polyethylene, polypropylene, polyurethane, and polyethylene terephthalate; and blends of these fibers. Preferred among synthetic fibers are those obtained from thermoplastic resins. In particular, the material of the non-woven fabric preferably does not change (e.g., melt or shrink) due to the foaming temperature. The material is more preferably pulp and/or polyester. A binder may be used as needed. The material of the non-woven fabric may be colored as needed.

The thickness of the non-woven fabric is not limited. For example, the maximum thickness of the non-woven fabric is preferably 0.1 mm or greater and 1 mm or less. When the thickness is within this range, the handleability is further improved. The lower limit of the thickness is more preferably 0.12 mm or greater. The upper limit thereof is more preferably 0.2 mm or less.

The non-woven fabric is laminated on at least one main surface of the resin sheet. Preferably, it is laminated on both main surfaces of the resin sheet.

The phrase "laminated on a main surface" herein means that, with the total area of the surface on which the non-woven fabric is laminated taken as 100%, the non-woven fabric is laminated such that it covers 50% or more of the total area. The non-woven fabric is preferably laminated such that it covers 70% or more, more preferably 80% or more, still more preferably 90% or more relative to 100% of the total area. The upper limit is 100% or less.

The non-woven fabric may be sliced to an appropriate size before laminated. Also in this case, the non-woven fabric is preferably laminated such that it covers the above percentage relative to 100% of the total area of the lamination surface.

In the production method, after the laminate is obtained, the subsequent heating step (foaming) is performed preferably without cooling the laminate. This enables better foaming.

The foaming temperature (i.e., heating temperature) of the laminate is preferably 180°C or higher. At a temperature of 180°C or higher, the resin composition sufficiently softens during foaming, facilitating communication between cells. This is considered to facilitate the formation of open cells. Such an increase in the percentage of open cells is not observed in resin compositions containing resins other than polyvinyl acetal even at increased foaming temperature, suggesting that such a phenomenon is unique to resin compositions containing a polyvinyl acetal and a plasticizer. The foaming temperature is more preferably 190°C or higher, still more preferably 230°C or higher. The upper limit thereof is not limited, but is practically 300°C or lower, for example.

The foaming time (i.e., heating time) of the laminate is not limited. The foaming time is preferably 0.1 minutes to 1 hour, for example. This enables better foaming. The lower limit of the foaming time is more preferably 1 minute or longer, still more preferably 2 minutes or longer. The upper limit thereof is more preferably 30 minutes or shorter, still more preferably 10 minutes or shorter.

The production method produces the foam with the non-woven fabric laminated thereon. In other words, the production method can suitably produce a laminated foam including the foam and a non-woven fabric laminated on at least one main surface (preferably both main surfaces) of the foam. Such a laminated foam is encompassed by the present invention. A step of removing the non-woven fabric may be performed as needed.

The foam of the present invention, having the above structure, can provide good walking comfort and exhibit excellent vibration-damping properties while being lightweight. The foam thus can be particularly suitably used for sound-insulating floors and sound-insulating walls. Moreover, the foam has high compressive strength to also provide underfoot comfort when used for flooring, for example, and thus can provide a high-performance, lightweight vibration-damping material that addresses the market needs such as quietness and comfort. The foam of the present invention is thus useful for various applications including members for vehicles such as automobiles, aircraft, and ships, members for buildings, electronic components, building materials for housing such as flooring, and electrical appliances for home and commercial use. In particular, the foam is preferably used for building materials for housing. The present invention also encompasses such a building material for housing including the foam of the present invention. The foam is particularly suitably used for flooring for housing. A foam sheet molded from the foam of the present invention is preferred because it has excellent handleability. Such a foam sheet including the foam of the present invention is one preferred embodiment of the present invention.

The present invention further encompasses a building material for housing including the above-described laminated foam of the present invention and a building material for housing including the above-described laminate of the present invention.

### - Advantageous Effects of Invention

The present invention can provide a foam, a laminated foam, a laminate, and a building material for housing that are capable of providing good walking comfort and exhibiting excellent vibration-damping properties while being light weight and also useful for recycling interlayer films for a laminated glass.

### DESCRIPTION OF EMBODIMENTS

The embodiments of the present invention are more specifically described in the following with reference to, but not limited to, examples.

The following compounds were used as compounding components for resin compositions in examples and comparative examples.
(1) Polyvinyl acetal
   Polyvinyl butyral 1 (PVB1): hydroxy group content 31 mol%, degree of acetylation 0.7 mol%, degree of butyralization 68.3 mol%, average degree of polymerization 1,800
   Polyvinyl butyral 2 (PVB2): hydroxy group content 22.0 mol%, degree of acetylation 4.0 mol%, degree of butyralization 74.0 mol%, average degree of polymerization 550
(2) Plasticizer: triethylene glycol di-2-ethylhexanoate (3GO)
(3) Tackifier: ARKON M-135, produced by Arakawa Chemical Industries Ltd. (softening point 135°C)
(4) Thermoplastic elastomer: styrene-ethylene-butylene-styrene copolymer (S1605, produced by Asahi Kasei Corp.)
(5) Liquid crystal polymer: LCP AL-7000, produced by Ueno Fine Chemicals Industry, Ltd.
(6) Filler: barium sulfate (barytes powder FBA, produced by Nippon Talc Co., Ltd.)
(7) Foaming agent: VINYFOR AC#R, produced by Eiwa Chemical Ind. Co., Ltd.

### (Example 1)

### (1) Production of foam

To 100 parts by weight of polyvinyl butyral 1 (PVB1) were added 40 parts by weight of the plasticizer and 6 parts by weight of the foaming agent, whereby a resin composition was obtained. The obtained resin composition was sufficiently kneaded at 110°C with a mixing roll and then extruded with an extruder into a sheet. This sheet is also referred to as a resin sheet.

A non-woven fabric SPC (N) (produced by Nippon Paper Papylia Co., Ltd., type: pulp, mass per unit area: 15 g/m²) was placed on both surfaces of the resin sheet and thermally compression-bonded at 120°C with a press machine, whereby a laminate was obtained. The obtained laminate was placed in an oven without being cooled, and the heat-decomposable foaming agent was decomposed at 210°C for five minutes in the oven, whereby a sheet-shaped foam was obtained.

### (2) Calculation of average aspect ratio of cells

The average aspect ratio (a/b) of cells was determined in conformity with the method described above. Specifically, the aspect ratio was determined as follows.

The foam sheet was bonded to a PET film having a thickness of 100 um, cut to a size having a width in TD of 4 mm and a length in MD 17 mm, and subjected to three-dimensional measurement with an X-ray CT device for a center portion in the thickness direction having a thickness of 3 mm, a width in TD of 3 mm, and a width in MD of 15 mm.

The X-ray CT device is not limited. In this experiment, nano3DX produced by Rigaku Corporation was used. The X-ray source was Mo. The resolution was 2.16 um/pixel (lens 1080, binning 2). The exposure time was 20 seconds/image, and 1,000 images were obtained.

The obtained images were subjected to three-dimensional image analysis using image processing software "Avizo 2019.4" (produced by ThermoFisher Scientific).

Using the Auto Thresholding module, binarization was performed at the following settings to separate cell portions from resin portions.
Type: Auto Thresholding High
Interpretation: 3D
Mode: min-max
Criterion: factorisation

Next, cell regions touching the image edges were deleted using the Border Kill module, and three-dimensionally independent cells were labelled using the Labeling module.

Finally, the aspect ratio (a/b) was determined, where a is the width each extracted cell region occupies in the thickness direction and b is the width the cell region occupies in TD.

### (3) Calculation of expansion ratio

The apparent density of the obtained foam was measured in conformity with JIS K7222 (2005). The density of the resin sheet before foaming was divided by the density (apparent density) of the foam after foaming to calculate the expansion ratio.

### (4) Measurement of thickness

The thickness of the obtained foam was measured.

### (5) Measurement of compressive elastic modulus

Using a specimen (300 mm × 300 mm) cut out from the obtained foam, the compressive elastic modulus was measured in conformity with JIS K7181 (2011) when the specimen was compressed at a test rate of 10 mm/min with an indenter having a diameter of 50 mm.

### (Example 2)

A resin sheet was obtained as in Example 1 except that the filler was added in the amount shown in Table 1. A sheet-shaped foam was then obtained as in Example 1 except that ECULE 3151A (produced by Toyobo Co., Ltd., type: polyester (PEs), mass per unit area: 15 g/m²) was used as the non-woven fabric. The foam was subjected to the evaluation of physical properties and the like.

### (Example 3)

A resin sheet was obtained as in Example 1 except that the filler and the tackifier were added in the respective amounts shown in Table 1. A sheet-shaped foam was then obtained as in Example 2 and subjected to the evaluation of physical properties and the like.

### (Example 4)

A resin sheet was obtained as in Example 1 except that the filler and the thermoplastic elastomer were added in the respective amounts shown in Table 1. A sheet-shaped foam was then obtained as in Example 2 and subjected to the evaluation of physical properties and the like.

### (Example 5)

A resin sheet was obtained as in Example 1 except that the filler and the liquid crystal polymer were added in the respective amounts shown in Table 1. A sheet-shaped foam was then obtained as in Example 2 and subjected to the evaluation of physical properties and the like.

### (Example 6)

A resin sheet was obtained as in Example 1 except that PVB2 was used instead of PVB1, and that the tackifier, the thermoplastic elastomer, and the filler were added in the respective amounts shown in Table 1. A sheet-shaped foam was then obtained as in Example 1 except that ECULE 3301A (produced by Toyobo Co., Ltd., type: PEs, mass per unit area: 30 g/m²) was used as a non-woven fabric. The foam was subjected to the evaluation of physical properties and the like.

### (Example 7)

A resin sheet was obtained as in Example 1 except that PVB2 was used instead of PVB1, that the amount of the plasticizer was changed to the amount shown in Table 1, and that the filler was added in the amount shown in Table 1. A sheet-shaped foam was then obtained as in Example 1 except that ECULE 3351A (produced by Toyobo Co., Ltd., type: PEs, mass per unit area: 15 g/m²) was used as the non-woven fabric and that the sheet-shaped foam was cut to a thickness of 6 mm with Bandknife splitting machine, Slicer (produced by Nippi, Inc.). The foam was subjected to the evaluation of physical properties and the like.

### (Comparative Example 1)

A sheet-shaped foam was obtained as in Example 1 except that Milife T05 (produced by ENEOS Techno Materials Corporation, type: PEs, mass per unit area: 5 g/m²) was used as the non-woven fabric. The foam was subjected to the evaluation of physical properties and the like.

### (Comparative Example 2)

The resin sheet obtained in Example 1 was placed in an oven to decompose the heat-decomposable foaming agent at a foaming temperature of 210°C for five minutes, whereby a sheet-shaped foam was prepared. The foam was subjected to the evaluation of physical properties and the like as in Example 1.

### (Comparative Example 3)

A commercial polyethylene foam (produced by Sekisui Chemical Co., Ltd., Softlon S, expansion ratio 10 times) was provided as a comparative example. This polyethylene foam was subjected to the evaluation of physical properties and the like as in Example 1.

### (Evaluation)

The foams obtained in the examples and the comparative examples were evaluated by the following methods. Table 1 shows the results.

### (1) Evaluation of walking comfort

The foam and a floor finishing material were stacked in this order on a flooring base. A tester walked on the floor finishing material. The feel during the walk was expressed as a score by sensory evaluation in accordance with the following criteria. The walking comfort was evaluated as "A" when this score was 2, 3, or 4. The walking comfort was evaluated as "B" when the score was 1 or 5.
5: Hard
4: Slightly hard
3: Intermediate
2: Slightly soft
1: Soft

### (2) Vibration-damping properties

The loss factor and the anti-resonance frequencies at 20°C were measured by mechanical impedance measurement (MIM) in conformity with JIS K7391 (2008).

Specifically, the foam was fixed between a steel plate having a width of 12 mm, a length of 240 mm, and a thickness of 1.2 mm and an aluminum plate (0.3 mm) having the same size using a double-sided tape (produced by Sekisui Chemical Co., Ltd., #5782). The resulting laminate sample was used to measure the loss factor and the anti-resonance frequencies by the central exciting method. The vibration-damping properties were evaluated in accordance with the following criteria. The table shows the second anti-resonance point and the loss factor.

### (Rating)

A: The loss factor was 0.1 or greater at an anti-resonance point at 800 Hz or less.
B: The loss factor was less than 0.1 at an anti-resonance point at 800 Hz or less.

**[Table 1]**

| | | | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|---|---|
| Foam | Composition (parts by weight) | Polyvinyl acetal | PVB1 | 100 | 100 | 100 | 100 | 100 | - | - | 100 | 100 | |
| | | | PVB2 | - | - | - | - | - | 100 | 100 | - | - | |
| | | Plasticizer | | 40 | 40 | 40 | 40 | 40 | 40 | 20 | 40 | 40 | |
| | | Polyethylene | | - | - | | - | - | - | - | - | - | 100 |
| | | Tackifier | | - | - | 15 | - | - | 5 | - | - | - | - |
| | | Thermoplastic elastomer | | - | - | - | 15 | - | 10 | - | - | - | - |
| | | Liquid crystal polymer | | - | - | - | - | 15 | - | - | - | - | - |
| | | Filler | | - | 50 | 50 | 50 | 30 | 40 | 30 | - | - | - |
| | Physical properties | Aspect ratio (a/b) | | 1.2 | 2.2 | 4.6 | 1.8 | 3.2 | 1.1 | 2.7 | 0.9 | 0.8 | 1.2 |
| | | Foaming ratio [times] | | 2.1 | 3.6 | 5.8 | 2.9 | 4.2 | 1.5 | 3.9 | 2.1 | 2.5 | 10 |
| | | Thickness [mm] | | 5 | 5 | 5 | 5 | 5 | 5 | 5 | 5 | 5 | 5 |
| | | Compressive elastic modulus [MPa] | | 1.1 | 1.2 | 10 | 1.5 | 1.4 | 1.5 | 1.8 | 0.9 | 0.8 | 3.5 |
| | Structure | Non-woven fabric (type/mass per unit area [g/m²]) | | Pulp15 | PEs/15 | PEs/15 | PEs/15 | PEs/15 | PEs/30 | PEs/15 | PEs/5 | - | - |
| | | Slice | | Not sliced | Not sliced | Not sliced | Not sliced | Not sliced | Not sliced | Sliced | Not sliced | - | - |
| Evaluation | | Walking comfort (rating/score) | | A/2 | A/3 | A/2 | A/4 | A/4 | A/4 | A/4 | B/1 | B/1 | A/2 |
| | | Second anti-resonance point | Hz | 583 | 598 | 602 | 592 | 618 | 627 | 624 | 588 | 573 | 543 |
| | | Loss factor | | 0.16 | 0.22 | 0.25 | 0.24 | 0.2 | 0.18 | 0.18 | 0.13 | 0.13 | 0.06 |
| | | Vibration-damping properties (rating) | | A | A | A | A | A | A | A | A | A | B |

### INDUSTRIAL APPLICABILITY

The present invention can provide a foam, a laminated foam, a laminate, and a building material for housing that are capable of providing good walking comfort and exhibiting excellent vibration-damping properties while being light weight and are also useful for recycling interlayer films for a laminated glass.

## Claims

1. A foam having a plurality of cells, the foam comprising:
a polyvinyl acetal; and
a plasticizer,
the foam having an average aspect ratio (a/b) of cells of 1.1 or greater,
the average aspect ratio (a/b) being calculated by a method wherein the foam is bonded to a PET film having a thickness of 100 um, cut to a size having a width in TD of 4 mm and a length in MD of 17 mm, and imaged with an X-ray CT device to obtain an image of a center portion in a thickness direction having a thickness of 3 mm, a width in TD of 3 mm, and a width in MD of 15 mm; the obtained image is subjected to three-dimensional analysis using image processing software, followed by binarization to separate cell portions from resin portions; subsequently, a cell region touching an image edge is deleted, and three-dimensionally independent cells are labelled; and finally, an aspect ratio, a/b, is calculated where a is a width that each extracted cell region occupies in the thickness direction and b is a width that the cell region occupies in TD.

2. The foam according to claim 1, having a compressive elastic modulus of 2 MPa or less.

3. The foam according to claim 1 or 2, further comprising a tackifier.

4. The foam according to claim 3,
wherein the tackifier is a hydrogenated petroleum resin having a softening point of 100°C or higher.

5. The foam according to claim 1, 2, 3, or 4, further comprising a filler.

6. The foam according to claim 5,
wherein the filler is barium sulfate.

7. The foam according to claim 1, 2, 3, 4, 5, or 6, further comprising a thermoplastic elastomer and/or a liquid crystal polymer.

8. A laminated foam comprising:
the foam according to claim 1, 2, 3, 4, 5, 6, or 7; and
a non-woven fabric laminated on at least one main surface of the foam.

9. A laminate comprising:
a resin sheet containing a polyvinyl acetal, a plasticizer, and a foaming agent; and
a non-woven fabric laminated on at least one main surface of the resin sheet.

10. A building material for housing, the building material comprising the foam according to claim 1, 2, 3, 4, 5, 6, or 7, the laminated foam according to claim 8, or the laminate according to claim 9.
